# EUROPEAN PATENT APPLICATION

(11) **EP 4 394 200 A1**
(43) Date of publication of application: **03.07.2024**
(21) Application number: 22861121.6
(22) Date of filing: 05.08.2022
(51) Int. Cl.: F16D 3/227

(54) **PLUNGING TYPE CONSTANT VELOCITY UNIVERSAL JOINT**

(30) Priority: 26.08.2021 JP 2021138190
(71) Applicant: NTN Corporation, Osaka-shi, Osaka 530-0005 (JP)
(72) Inventor: KOBAYASHI, Masazumi, Iwata-shi Shizuoka 438-8510 (JP); SUGIYAMA, Tatsuro, Iwata-shi Shizuoka 438-8510 (JP)
(74) Representative: Grünecker Patent- und Rechtsanwälte PartG mbB
(86) International application number: PCT/JP2022/030153
(87) International publication number: WO 2023/026831

(57) **Abstract**

Provided is a plunging type constant velocity universal joint (1) including: an outer joint member (2) having a plurality of linear track grooves (7); an inner joint member (3) having a plurality of linear track grooves (9); a plurality of torque transmission balls (4); and a cage (5) configured to accommodate the torque transmission balls (4) in pockets (5a). A curvature center (O1) of a spherical outer peripheral surface (11) and a curvature center (O2) of a spherical inner peripheral surface (12) of the cage (5) are offset toward opposite sides in an axial direction with respect to a joint center (O). A spherical clearance (δ3) that allows guide in contact is formed between a spherical outer peripheral surface (Rc2) of the inner joint member (3) and a spherical inner peripheral surface (12) of the cage (5). A positive axial clearance is formed between the pocket (5a) of the cage (5) and the torque transmission ball (4).

## Description

### TECHNICAL FIELD

The present invention relates to a plunging type constant velocity universal joint to be used in power transmission systems such as automobiles and various industrial machines, for example, a drive shaft or a propeller shaft for an automobile.

### BACKGROUND ART

Constant velocity universal joints to be applied to a drive shaft of an automobile are roughly classified into a fixed type constant velocity universal joint that allows only angular displacement between two axes, and a plunging type constant velocity universal joint that allows both the angular displacement and axial displacement. With regard to a drive shaft for an automobile, typically, a fixed type constant velocity universal joint is used on a drive wheel side (also referred to as "out-board side"), and a plunging type constant velocity universal joint is used on a differential side (also referred to as "in-board side"). The two constant velocity universal joints are coupled to each other through intermediation of an intermediate shaft. Constant velocity universal joints are selected depending on use conditions, applications, and the like.

As the plunging type constant velocity universal joint, a double-offset constant velocity universal joint (DOJ) and a tripod type constant velocity universal joint (TJ) are representatively given. The plunging type constant velocity universal joint of DOJ type has been widely used because of its low manufacturing cost and small rotational backlash in the joint. As the plunging type constant velocity universal joint of DOJ type, the one including six balls and the one including eight balls have been known. In Patent Document 1, a DOJ with a compact design including eight balls is described, and in Patent Document 2, a DOJ with a maximum operating angle of 30° or more in which an increase in operating angle and a reduction in weight and size are attained is described.

In recent years, along with the market popularity of electric vehicles (EV) and sport utility vehicles (SUV), there has been an increase in application of the DOJ type that causes less rotational backlash in the joint and is adaptable to an increase in normal operating angle and an increase in maximum operating angle. This is because, in the EV, torque load responsiveness is required, and the DOJ type with small rotational backlash is suitable. Further, in the SUV, an increase in normal operating angle (8° or more, for example, 10°) or a further increase in maximum operating angle (30° or more, for example, 35°) for setting a position of a differential higher in order to increase travel performance has been demanded, and the DOJ type is suitable therefor.

In the plunging type constant velocity universal joint, typically, when there is given a full rebound state in which the suspension is maximally extended, the maximum operating angle is formed. As for the normal operating angle, a related-art normal operating angle in a drive shaft of such as a current passenger vehicle is relatively small, and normally, the joint is used at a normal operating angle of about 6°.

In the TJ type, when the normal operating angle is higher, an induced thrust (third order component) increases, which causes horizontal oscillation of a vehicle at the start. In contrast, the DOJ type has slide resistance larger than that of the TJ type, and is disadvantageous in vibration.

In order to reduce the slide resistance in the joint of DOJ type, there has been proposed a joint in which an axial clearance is secured between a spherical outer peripheral surface of an inner joint member and a spherical inner peripheral surface of a cage, and in which a slight pocket clearance is secured between a ball and a pocket of the cage (Patent Document 3).

### PRIOR ART DOCUMENTS

### PATENT DOCUMENTS

Patent Document 1: JP 10-73129 A
Patent Document 2: JP 2007-85488 A
Patent Document 3: JP 2002-54650 A

### SUMMARY OF THE INVENNTION

### PROBLEMS TO BE SOLVED BY THE INVENTION

In the related-art automobiles, the vibration level of the engine was high. Thus, without securing the axial clearance between the inner joint member and the cage in 1 mm or more, the vibration of the engine available at that time was not able to be damped in order to reduce the slide resistance. Thus, a method like the one proposed in Patent Literature 3 has been adapted. However, when the axial clearance between the inner joint member and the cage is large, there is a fear in that the constant velocity characteristics become unstable.

Meanwhile, as a technology trend, in recent automobiles, engines have been reduced in vibration, and vibration of a drive source is extremely reduced in the EV. The present has been made by focusing on such a latest technology trend and finding out new specifications of the DOJ satisfying slide resistance, durability at a high normal operating angle, and constant velocity characteristics. The concepts and the findings in the development process of the present invention are described later.

In view of the above-mentioned problem, the present invention has an object to provide a plunging type constant velocity universal joint having new specifications of a DOJ that reduce slide resistance, secure durability even at a high normal operating angle, and satisfy stable constant velocity characteristics.

### SOLUTION TO THE PROBLEMS

As a result of extensive studies and tests for achieving the above-mentioned object, the inventors of the present invention have arrived at the present invention after been conceived of new specifications of a DOJ in which a positive axial clearance is formed between a pocket of a cage and a torque transmission ball, based on spherical surface specifications of normal type in which a curvature radius of a spherical inner peripheral surface of a cage and a curvature radius of a spherical outer peripheral surface of an inner joint member are set to be substantially equal to each other, and a spherical clearance that allows guide in contact is formed between the spherical inner peripheral surface of the cage and the spherical outer peripheral surface of the inner joint member.

As a technical measure for achieving the above-mentioned object, according to the present invention, there is provided a plunging type constant velocity universal joint, comprising: an outer joint member comprising a cylindrical inner peripheral surface having a plurality of linear track grooves extending along an axial direction; an inner joint member comprising a spherical outer peripheral surface having a plurality of linear track grooves which are opposed to the plurality of linear track grooves of the outer joint member and extend along the axial direction; a plurality of torque transmission balls incorporated between the plurality of linear track grooves of the outer joint member and the plurality of linear track grooves of the inner joint member; and a cage, which is configured to accommodate the torque transmission balls in pockets, and comprises a spherical outer peripheral surface and a spherical inner peripheral surface, which are guided in contact with the cylindrical inner peripheral surface of the outer joint member and the spherical outer peripheral surface of the inner joint member, respectively. A curvature center of the spherical outer peripheral surface and a curvature center of the spherical inner peripheral surface of the cage are offset toward opposite sides in the axial direction with respect to a joint center. A spherical clearance that allows guide in contact is formed between the spherical outer peripheral surface of the inner joint member and the spherical inner peripheral surface of the cage. A positive axial clearance is formed between the pocket of the cage and the torque transmission ball. With the above-mentioned configuration, a plunging type constant velocity universal joint having new specifications of a DOJ that reduce slide resistance, secure durability even at a high normal operating angle, and satisfy stable constant velocity characteristics can be provided.

Specifically, the positive axial clearance between the pocket of the cage and the torque transmission ball is set within a range of from +0.001 mm to +0.050 mm. Thus, the rolling region of the torque transmission ball on the track grooves of the outer joint member and the inner joint member increases, thereby reducing the slide resistance.

A rotational backlash amount in the plunging type constant velocity universal joint is set to 15 minutes or less. Thus, torque load responsiveness in the EV vehicle is also favorable.

It is preferred that a transverse cross sectional shape of each of the track groove of the outer joint member and the track groove of the inner joint member be a gothic arch shape that allows angular contact with the torque transmission ball. With this configuration, rotational backlash in the joint can be reliably suppressed.

The number of the plurality of torque transmission balls is set within a range of from five to eight. Thus, a plunging type constant velocity universal joint suitable for power transmission systems such as automobiles and various industrial machines can be configured.

### EFFECTS OF THE INVENTION

According to the present invention, it is possible to achieve a plunging type constant velocity universal joint having new specifications of a DOJ that reduce slide resistance, secure durability even at a high normal operating angle, and satisfy stable constant velocity characteristics.

### BRIEF DESCRIPTION OF DRAWINGS

FIG. 1 is a longitudinal sectional view of a plunging type constant velocity universal joint according to an embodiment of the present invention, and is a longitudinal sectional view taken along the line B-N-B of FIG. 2.
FIG. 2 is a transverse sectional view of the plunging type constant velocity universal joint according to the embodiment of the present invention, and is a transverse sectional view taken along the line A-A of FIG. 1.
FIG. 3 is a transverse sectional view for illustrating angular contact between a track groove and a torque transmission ball and internal rotational backlash in the plunging type constant velocity universal joint of this embodiment.
FIG. 4 is a longitudinal sectional view for illustrating an axial clearance between the torque transmission ball and a pocket of a cage.
FIG. 5 is a longitudinal sectional view for illustrating the axial clearance between the torque transmission ball and the pocket of the cage and a spherical clearance between a spherical outer peripheral surface of an inner joint member and a spherical inner peripheral surface of the cage in the plunging type constant velocity universal joint of this embodiment.
FIG. 6 is a schematic view for illustrating a state at a high normal operating angle and a state at a related-art normal operating angle for comparison.
FIG. 7 is a graph for showing a test result of slide resistance in the plunging type constant velocity universal joint of this embodiment and in a related-art standard specification product.
FIG. 8 is a graph for showing a test result of a surface temperature increase amount of an outer joint member in the plunging type constant velocity universal joint of this embodiment and in the related-art standard specification product.

### EMBODIMENTS OF THE INVENTION

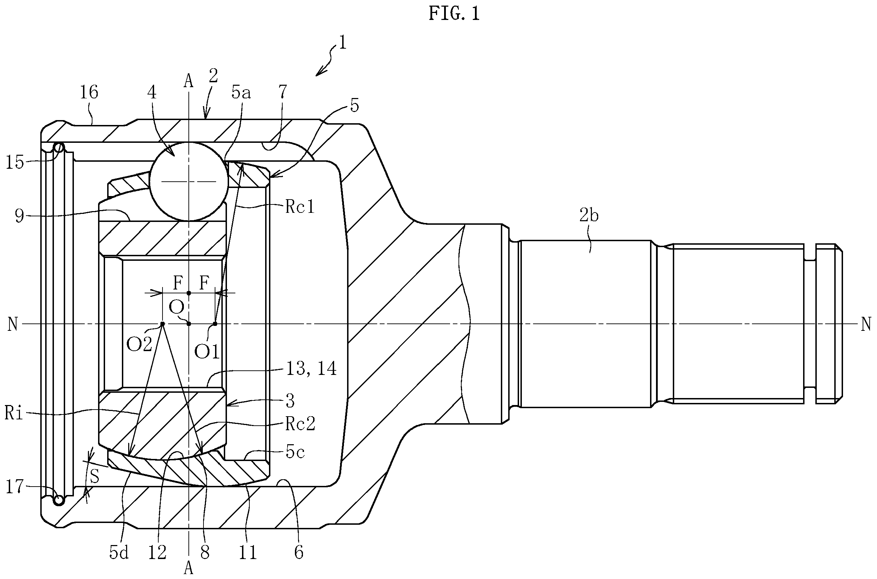

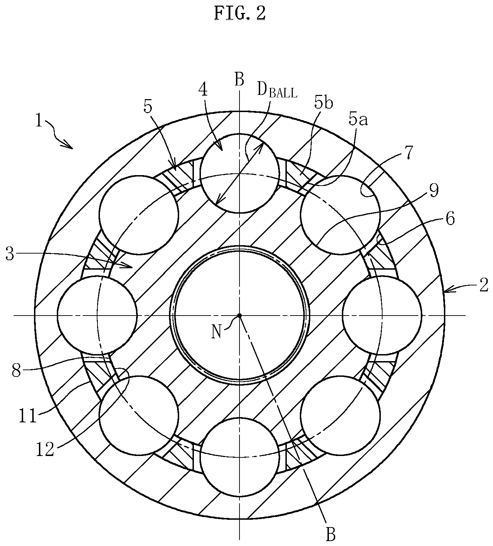

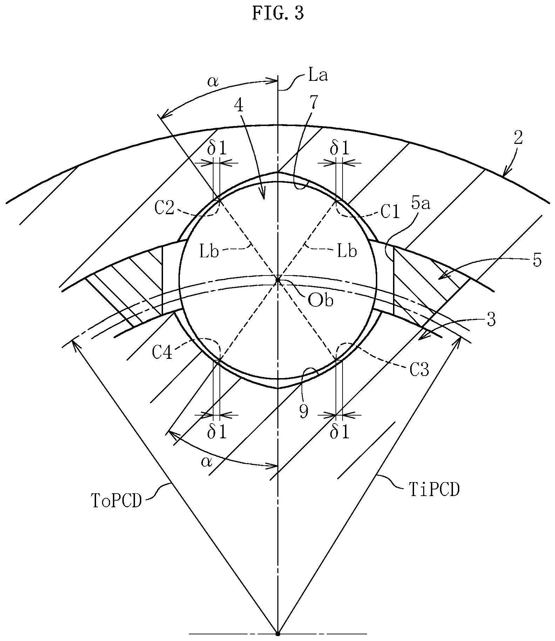

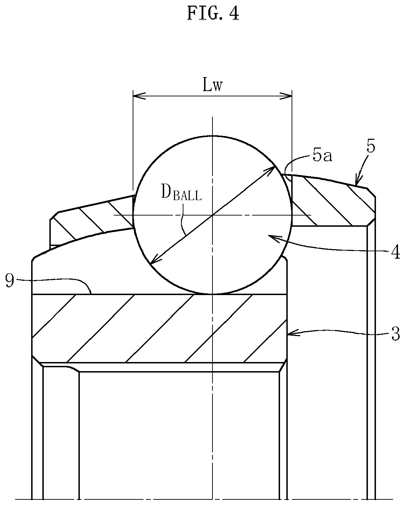

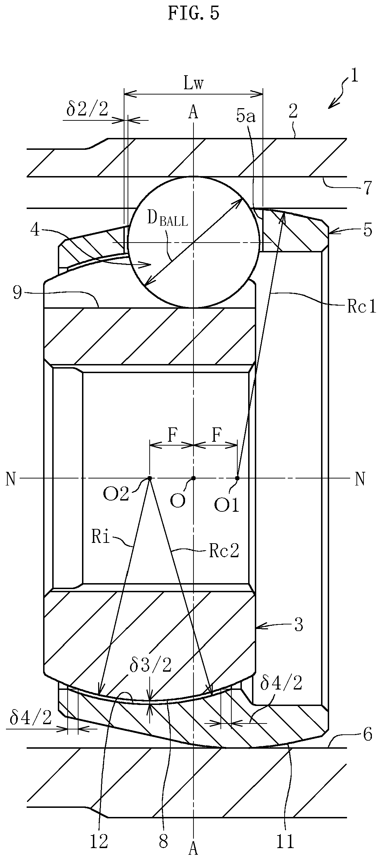

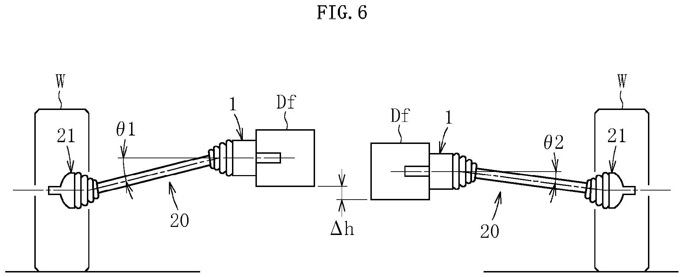

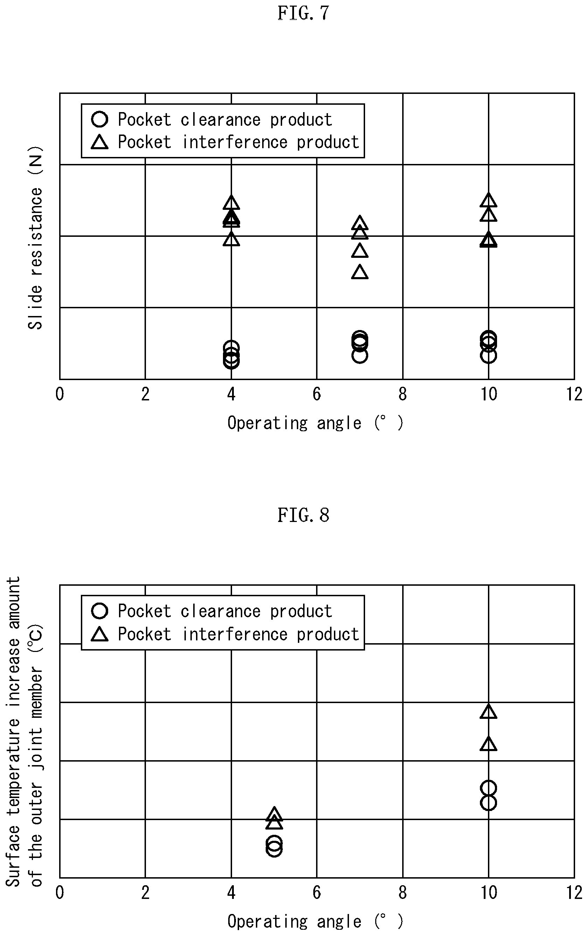

A plunging type constant velocity universal joint according to an embodiment of the present invention is described with reference to FIG. 1 to FIG. 8. FIG. 1 is a longitudinal sectional view of a plunging type constant velocity universal joint of this embodiment, and is a longitudinal sectional view taken along the line B-N-B of FIG. 2. FIG. 2 is a transverse sectional view of the plunging type constant velocity universal joint of this embodiment, and is a transverse sectional view taken along the line A-A of FIG. 1. FIG. 3 is a transverse sectional view for illustrating angular contact between a track groove and a torque transmission ball and internal rotational backlash in the plunging type constant velocity universal joint of this embodiment. FIG. 4 is a longitudinal sectional view for illustrating an axial clearance between the torque transmission ball and a pocket of a cage. FIG. 5 is a longitudinal sectional view for illustrating the axial clearance between the torque transmission ball and the pocket of the cage and a spherical clearance between a spherical outer peripheral surface of an inner joint member and a spherical inner peripheral surface of the cage in the plunging type constant velocity universal joint of this embodiment. FIG. 6 is a schematic view for illustrating a state at a high normal operating angle and a state at a related-art normal operating angle for comparison. FIG. 7 is a graph for showing a test result of slide resistance in the plunging type constant velocity universal joint of this embodiment and in a related-art standard specification product. FIG. 8 is a graph for showing a test result of a surface temperature increase amount of an outer joint member in the plunging type constant velocity universal joint of this embodiment and in the related-art standard specification product.

As illustrated in FIG. 1 and FIG. 2, a plunging type constant velocity universal joint 1 is a so-called double-offset plunging type constant velocity universal joint (sometimes abbreviated as "DOJ"), and mainly comprises an outer joint member 2, an inner joint member 3, torque transmission balls 4, and a cage 5. A cylindrical inner peripheral surface 6 of the outer joint member 2 has eight track grooves 7. The track grooves 7 are formed at equal intervals in a circumferential direction and linearly extend along an axial direction. A spherical outer peripheral surface 8 of the inner joint member 3 has track grooves 9 which are opposed to the track grooves 7 of the outer joint member 2. The track grooves 9 are formed at equal intervals in a circumferential direction and linearly extend along the axial direction. Eight torque transmission balls (hereinafter simply referred to also as "balls") 4 are individually incorporated between the track grooves 7 of the outer joint member 2 and the track grooves 9 of the inner joint member 3. The balls 4 are received in pockets 5a of the cage 5.

The cage 5 comprises a spherical outer peripheral surface 11 and a spherical inner peripheral surface 12. The spherical outer peripheral surface 11 is fitted to and guided in contact with the cylindrical inner peripheral surface 6 of the outer joint member 2. The spherical inner peripheral surface 12 is fitted to and guided in contact with the spherical outer peripheral surface 8 of the inner joint member 3. The spherical outer peripheral surface 11 of the cage 5 is formed to have a curvature radius Rc1 about a curvature center O1, and the spherical inner peripheral surface 12 is formed to have a curvature radius Rc2 about a curvature center O2. The spherical outer peripheral surface 8 of the inner joint member 3 is formed to have a curvature radius Ri about the curvature center O2. The curvature centers O1 and O2 are located on an axis N, and are offset by equal distances F in the axial direction with respect to a joint center O. With this configuration, when the joint forms an operating angle, the balls 4 are always guided on a plane bisecting an angle formed by both axes of the outer joint member 2 and the inner joint member 3, thereby achieving transmission between two shafts with constant-velocity rotation.

A stop ring groove 15 is provided at an opening-side end portion of the outer joint member 2, and a stop ring 17 is mounted to the stop ring groove 15, thereby preventing an inner assembly illustrated in FIG. 1 comprising the inner joint member 3, the balls 4, and the cage 5 from moving out from the opening-side end portion of the outer joint member 2. The opening-side end portion of the outer joint member 2 has, on an outer periphery thereof, a boot-mounting groove 16. A stem portion (shaft portion) 2b is integrally formed on a counter-opening side of the outer joint member 2, and is coupled to a differential (not shown).

The spherical outer peripheral surface 8 of the inner joint member 3 has the linear track grooves 9, and hence a groove depth of each of the track grooves 9 becomes smaller as extending from a center of the inner joint member 3 in the axial direction toward both ends. A spline (including serration, which similarly applies to the following description) 14 is formed on a coupling hole 13 of the inner joint member 3. A shaft end portion of an intermediate shaft (not shown) is spline-fitted to the coupling hole 13, and is fixed to the inner joint member 3 by a shoulder portion of the intermediate shaft and the stop ring in the axial direction.

Eight pockets 5a are formed on the axial center of the cage 5 indicated by the line A-A of FIG. 1 at equal intervals in a circumferential direction, and pillar portions 5b (see FIG. 2) are each provided between adjacent pockets 5a. A cutout 5c for receiving the inner joint member 3 to be incorporated therein is formed along an inner periphery of a large-diameter-side end portion of the cage 5. A stopper surface 5d of the cage 5 has a conical shape so that the stopper surface 5d is tangentially connected to the spherical outer peripheral surface 11. In the plunging type constant velocity universal joint 1 of this embodiment, the maximum operating angle is set to, for example, 25°. When the joint forms an operating angle, the cage 5 is inclined at half an angle formed by both axes of the outer joint member 2 and the inner joint member 3. Thus, an inclination angle S of the stopper surface 5d is set to 12.5°. With this configuration, the maximum allowable angle of the plunging type constant velocity universal joint 1 can be restricted.

With reference to FIG. 3, angular contact between each of the track groove 7 of the outer joint member 2 and the track groove 9 of the inner joint member 3 and the torque transmission ball 4 and internal rotational backlash are described. FIG. 3 shows one track groove 7, one track groove 9, and one torque transmission ball 4 taken along the line B-N of FIG. 2. The transverse cross sections of the track groove 7 of the outer joint member 2 and the transverse section of the track groove 9 of the inner joint member 3 are each formed into a gothic arch shape which is formed by a combination of two arcs. Therefore, the ball 4 is held in angular contact with the track groove 7 at two points C 1 and C2 and with the track groove 9 at two points C3 and C4. The transverse cross sectional shape of each of the track grooves 7 and 9 is not limited to the gothic arch shape described above, and may be an elliptical shape.

As illustrated in FIG. 3, a pitch circle diameter of the track groove 7 of the outer joint member 2 is represented by ToPCD, and a pitch circle diameter of the track groove 9 of the inner joint member 3 is represented by TiPCD. ToPCD is set larger than TiPCD by, for example, about 0.050 mm at a median value. As a result, a center Ob of the torque transmission ball 4 is located at a radially intermediate position between ToPCD and TiPCD, and a track clearance is formed in a track contact angle α direction between the ball 4 and each of the track groove 7 of the outer joint member 2 and the track groove 9 of the inner joint member 3. A track clearance δ1 in the circumferential direction is generated based on the track clearance in the track contact angle α direction. The rotational backlash amount in the joint when the inner joint member 3 and the outer joint member 2 are rotated relative to each other is four times larger than the track clearance δ1 in the circumferential direction.

In the plunging type constant velocity universal joint 1 of this embodiment, the rotational backlash amount in the joint is set to 15 minutes or less. Thus, torque load responsiveness in the EV is also favorable. Further, the transverse cross sectional shape of each of the track grooves 7 and 9 is formed in the gothic arch shape. Thus, the rotational backlash amount in the joint can be reliably suppressed. In FIG. 3, the dimensional difference between TiPCD and ToPCD and the track clearance are illustrated in an exaggerated manner.

The track contact angle α is an angle α between a straight line La and a straight line Lb in FIG. 3. The straight line La is a center line of each of the transverse cross sections of the track grooves 7 and 9, and corresponds to the line B-N of FIG. 2. The straight line Lb is a straight line connecting each of contact points C1, C2, C3, and C4 of the ball 4 on side surfaces of the track grooves 7 and 9 to a center Ob of the ball 4.

Next, the axial clearance between the pocket 5a of the cage 5 and the torque transmission ball 4 is described with reference to FIG. 4. When the diameter of the ball 4 is represented by D_{BALL}, and the width of the pocket 5a of the cage 5 is represented by Lw, in a case of Lw<D_{BALL}, a negative axial clearance is secured, and an interference is secured between the ball 4 and the pocket 5a. In contrast, in a case of Lw>D_{BALL}, a positive axial clearance is secured, and a clearance is secured between the ball 4 and the pocket 5a.

Here, the concepts and the findings in the development process of the present invention are described. As a technology trend, in recent automobiles, engines have been reduced in vibration, and vibration of a drive source is extremely reduced in the EV. The inventors of the present invention have focused on such a latest technology trend, and have studied a spherical clearance of a DOJ having related-art standard specifications. This study served as a clue leading to the present invention.

In the spherical clearance in the DOJ having the standard specifications, a spherical clearance that allows guide in contact between the spherical inner peripheral surface 12 of the cage 5 and the spherical outer peripheral surface 8 of the inner joint member 3 is about 0.050 mm at a median value. With the spherical clearance, the axial backlash amount between the cage 5 and the inner joint member 3 is about 0.15 mm. Thus, the movable amount of the inner joint member 3 in the axial direction with respect to the outer joint member 2 is 0.30 mm which is twice as large as about 0.15 mm.

The following concept was obtained. As described above, with the reduction in vibration of the engine and the reduction in vibration of the drive source which are the latest technology trend, based on the spherical clearance of the DOJ having the standard specifications, when the axial clearance between the ball 4 and the pocket 5a of the cage 5 is opened, small slide resistance of the inner joint member 3 with respect to the outer joint member 2 is enabled by smooth rolling of the ball within a range of 0.30 mm. Based on this, new specifications of the DOJ that satisfy slide resistance, durability at the high normal operating angle, and constant velocity characteristics were found out. In addition, recent engine vehicles have been reduced in vibration, and it was verified that the vibration can be damped sufficiently with the axial backlash amount within the above-mentioned range.

The focusing, study, concept, and verification as described above are first attempts for those skilled in the art. This is because an axial backlash amount between a cage and an inner joint member when an engine vibration is large in the related-art is secured in 1 mm or more, and it has been widely understood for many years by those skilled in the art that the vibration of the engine cannot be damped by the joint unless the axial backlash amount in such an extent is provided.

The plunging type constant velocity universal joint 1 of this embodiment has a characteristic configuration in which (1) based on spherical surface specifications of normal type in which the curvature radius of the spherical inner peripheral surface of the cage and the curvature radius of the spherical outer peripheral surface of the inner joint member are set to be substantially equal to each other, and the spherical clearance that allows guide in contact is formed between the spherical inner peripheral surface of the cage and the spherical outer peripheral surface of the inner joint member, (2) the plunging type constant velocity universal joint having new specifications of the DOJ in which a positive axial clearance is formed between the pocket of the cage and the torque transmission ball is provided.

The characteristic configuration of the plunging type constant velocity universal joint 1 of this embodiment is specifically described with reference to FIG. 5. In FIG. 5, the main part of FIG. 1 is enlarged, and the axial clearance between the torque transmission ball 4 and the pocket 5a of the cage 5 and the spherical clearance between the spherical outer peripheral surface 8 of the inner joint member 3 and the spherical inner peripheral surface 12 of the cage 5 are illustrated in an exaggerated manner. A positive axial clearance δ2 is formed between the ball 4 and the pocket 5a of the cage 5. The positive axial clearance δ2 is represented with δ2=Lw-D_{BALL}, and it is desired that δ2 be within a range of from +0.001 mm to +0.050 mm. With this configuration, the ball 4 can roll smoothly in the pocket 5a, and a rolling region of the ball 4 on the track grooves 7 and 9 of the outer joint member 2 and the inner joint member 3 increases, thereby reducing the slide resistance. In the plunging type constant velocity universal joint 1 of this embodiment, δ2 is set within a range of from +0.001 mm to +0.050 mm.

The spherical inner peripheral surface 12 of the cage 5 is formed to have the curvature radius Rc2 about the curvature center O2, and the spherical outer peripheral surface 8 of the inner joint member 3 is formed to have the curvature radius Ri about the curvature center O2. A spherical clearance δ3 between the spherical inner peripheral surface 12 of the cage 5 and the spherical outer peripheral surface 8 of the inner joint member 3 is represented with δ3=2×(Rc2-Ri), and the spherical clearance δ3 is about 0.050 mm at a median value. The spherical clearance δ3 refers to a spherical clearance that allows guide in contact between the spherical outer peripheral surface of the inner joint member and the spherical inner peripheral surface of the cage in the Description and the claims.

An axial clearance δ4/2 on one side between the cage 5 and the inner joint member 3 due to the spherical clearance δ3 is about 0.15 mm, and a movable amount of the inner joint member 3 with respect to the outer joint member 2 in the axial direction is about 0.30 mm which is twice as large as about 0.15 mm. In recent engine vehicles having been reduced in vibration, the vibration can be damped sufficiently with the movable amount in the axial direction within the above-mentioned range. Thus, the axial clearance δ4 between the cage 5 and the inner joint member 3 and the positive axial clearance δ2 between the ball 4 and the pocket 5a of the cage 5 mutually work, thereby being capable of reducing the slide resistance. Further, the durability at the high normal operating angle and the constant velocity characteristics can be satisfied.

FIG. 6 is a schematic view for illustrating a state at a high normal operating angle (for example, about 10°) in a recent SUV and a state at a related-art normal operating angle for comparison. As illustrated in FIG. 6, in a drive shaft 20, a fixed type constant velocity universal joint 21 at an out-board end is coupled to a wheel W, and the plunging type constant velocity universal joint 1 at an in-board end is coupled to a differential Df. The left half in FIG. 6 shows a state at a high normal operating angle θ1, and the right half shows a state at a related-art normal operating angle θ2. In the case of the high normal operating angle θ1, the height of the differential Df from the ground is higher than that in the case of the related-art normal operating angle θ2 by Δh, thereby increasing travel performance. However, the normal operating angle increases, thereby increasing the load on the torque transmission balls.

Here, the normal operating angle in the Description is defined. The normal operating angle refers to an operating angle generated in a plunging type constant velocity universal joint for a drive shaft when a steering wheel is set to a straight advancing state in an automobile when one person rides on a horizontal and flat road surface. A related-art normal operating angle in a drive shaft for a current passenger vehicle or the like is relatively small, and is normally used at about 6°.

The durability of the plunging type constant velocity universal joint of DOJ type decreases as a use operating angle is higher. In the plunging type constant velocity universal joint of DOJ type, when an operating angle is given, a force acting on the ball varies during one rotation, and at the maximum load, a load larger than that at the operating angle of 0° by several percent to several times depending on the angle is applied. For example, when the normal operating angle increases, and the normal operating angle is increased from the current normal operating angle of 6° to 10°, the maximum load applied to the ball increases by from about 20% to about 30%.

### Example 1

In the spherical surface specifications of normal type in which the spherical clearance δ3 between the spherical inner peripheral surface 12 of the cage 5 and the spherical outer peripheral surface 8 of the inner joint member 3 is set to about 0.050 mm at a median value, for a product in which a positive axial clearance is secured between the pocket 5a of the cage 5 and the torque transmission ball 4 (pocket clearance product) and a product in which a negative axial clearance (pocket interference product) is secured therebetween, slide resistance and a surface temperature increase amount of the outer joint member (outer ring) was tested and evaluated. A test product is called an EDJ in NTN which uses eight balls, and has a joint size of #104.

The slide resistance of the plunging type constant velocity universal joint 1 of DOJ type was analyzed, and it was found out that, as an effective measure for reducing the slide resistance, the positive axial clearance δ2 between the pocket 5a of the cage 5 and the ball 4 contributed to the reduction in slide resistance. It was verified that when the positive axial clearance δ2 was given, the rolling region increased between the ball 4 and the track grooves 7 and 9 of the outer joint member 2 and the inner joint member 3, thereby being capable of reducing the slide resistance. The test result of the slide resistance is shown in FIG. 7.

### <Test Conditions>

·Load torque: 98 Nm
·No rotation
Axial vibration width : ±0.1 mm (frequency of 20 Hz)

The durability of the plunging type constant velocity universal joint 1 of DOJ type decreases as a use operating angle is higher. As the operating angle is higher, the load acting on the ball 4 increases to increase the track contact pressure. With this, heat generation during rotation of the joint also increases, thereby leading to the reduction in durability. As a countermeasure thereagainst, it was verified that: it was effective for suppressing the heat generation that the positive axial clearance δ2 was given between the pocket 5a of the cage 5 and the ball 4; and the ball 4 rolled while suppressing sliding between the ball 4 and each of the track grooves 7 and 9 of the outer joint member 2 and the inner joint member 3, thereby being capable of reducing a friction between the ball 4 and each of the track grooves 7 and 9. The test result of the outer ring temperature increase amount is shown in FIG. 8. The effect is remarkable particularly at the high normal operating angle (10°).

### <Test Conditions>

·Load torque: 373 Nm
Number of rotations: 200 rpm
Operating angle: 5°, 10°

In the embodiment and the example as described above, the plunging type constant velocity universal joint 1 of DOJ type using the eight torque transmission balls 4 has been exemplified. However, the present invention is not limited thereto, and can be carried out as appropriate in a range of the number of torque transmission balls 4 of from five to eight. The plunging type constant velocity universal joint suitable for power transmission systems such as automobiles and various industrial machines can be configured. Further, the number of torque transmission balls 4 may be eight or more.

The present invention is not limited to the above-mentioned embodiment and example. As a matter of course, the present invention may be carried out in various modes without departing from the spirit of the present invention. The scope of the present invention is defined in claims, and encompasses equivalents described in claims and all changes within the scope of claims.

### DESCRIPTION OF REFERENCE SIGNS

- 1: plunging type constant velocity universal joint
- 2: outer joint member
- 3: inner joint member
- 4: torque transmission ball
- 5: cage
- 5a: pocket
- 6: cylindrical inner peripheral surface
- 7: track groove
- 8: spherical outer peripheral surface
- 9: track groove
- 11: spherical outer peripheral surface
- 12: spherical inner peripheral surface
- D_{BALL}: ball diameter
- F: offset amount
- O: joint center
- O1: curvature center
- O2: curvature center
- δ1: track clearance in circumferential direction
- δ2: positive axial clearance between ball and pocket
- δ3: spherical clearance
- δ4: axial clearance between cage and inner joint member

## Claims

1. A plunging type constant velocity universal joint, comprising:
an outer joint member comprising a cylindrical inner peripheral surface having a plurality of linear track grooves extending along an axial direction;
an inner joint member comprising a spherical outer peripheral surface having a plurality of linear track grooves which are opposed to the plurality of linear track grooves of the outer joint member and extend along the axial direction;
a plurality of torque transmission balls incorporated between the plurality of linear track grooves of the outer joint member and the plurality of linear track grooves of the inner joint member; and
a cage, which is configured to accommodate the torque transmission balls in pockets, and comprises a spherical outer peripheral surface and a spherical inner peripheral surface, which are guided in contact with the cylindrical inner peripheral surface of the outer joint member and the spherical outer peripheral surface of the inner joint member, respectively,
wherein a curvature center of the spherical outer peripheral surface and a curvature center of the spherical inner peripheral surface of the cage are offset toward opposite sides in the axial direction with respect to a joint center,
wherein a spherical clearance that allows guide in contact is formed between the spherical outer peripheral surface of the inner joint member and the spherical inner peripheral surface of the cage, and
wherein a positive axial clearance is formed between the pocket of the cage and the torque transmission ball.

2. The plunging type constant velocity universal joint according to claim 1, wherein the positive axial clearance between the pocket of the cage and the torque transmission ball is set within a range of from +0.001 mm to +0.050 mm.

3. The plunging type constant velocity universal joint according to claim 1 or 2, wherein a rotational backlash amount in the plunging type constant velocity universal joint is set to 15 minutes or less.

4. The plunging type constant velocity universal joint according to any one of claims 1 to 3, wherein a transverse cross sectional shape of each of the track groove of the outer joint member and the track groove of the inner joint member is a gothic arch shape that allows angular contact with the torque transmission ball.

5. The plunging type constant velocity universal joint according to any one of claims 1 to 4, wherein the number of the plurality of torque transmission balls is set within a range of from five to eight.
